# EUROPÄISCHE PATENTSCHRIFT

(11) **EP 3 969 161 B1**
(45) Veröffentlichungstag und Bekanntmachung des Hinweises auf die Patenterteilung: **18.11.2026**
(21) Anmeldenummer: 20719363.2
(22) Anmeldetag: 07.04.2020
(51) Int. Cl.: G01N 35/00

(54) **LABORGERÄT, LABORGERÄTEANORDNUNG SOWIE VERWENDUNG EINES LABORGERÄTS**
LABORATORY DEVICE, LABORATORY DEVICE ARRANGEMENT, AND USE OF A LABORATORY DEVICE
APPAREIL DE LABORATOIRE, ENSEMBLE D'APPAREILS DE LABORATOIRE ET UTILISATION D'UN APPAREIL DE LABORATOIRE

(30) Priorität: 16.05.2019 DE 102019112943
(43) Veröffentlichungstag der Anmeldung: 23.03.2022
(73) Patentinhaber: IKA - Werke GmbH & Co. KG, 79219 Staufen (DE)
(72) Erfinder: BABEL, Christian, 79219 Staufen (DE)
(74) Vertreter: Mertzlufft-Paufler, Cornelius
(86) Internationale Anmeldenummer: PCT/EP2020/059903
(87) Internationale Veröffentlichungsnummer: WO 2020/229059

(56) Entgegenhaltungen:
- EP-A1- 3 428 653
- WO-A1-2017/164378
- WO-A1-2019/053208
- DE-U1- 20 316 560
- US-A- 4 960 177
- US-A1- 2010 281 987

## Beschreibung

Die Erfindung betrifft Laborgeräte, eine Laborgeräteanordnung mit zumindest zwei Laborgeräten sowie die Verwendung eines Laborgeräts.

Laborgeräte sind in unterschiedlichen Ausführungsformen aus der Praxis vorbekannt; so zum Beispiel als Laborrührer, die auch als Magnetrührer bezeichnet werden, wenn sie einen magnetischen Rührantrieb aufweisen.

Aus der WO 2019 053 208 A1 ist ein Magnetrührer mit mindestens einem einstellbaren Betriebsparameter zum Steuern mindestens einer Laborgerätfunktion und einem Außengehäuse vorbekannt.

Das Außengehäuse weist eine Kopplungseinrichtung zum Ankoppeln des Laborgeräts an mindestens ein weiteres Laborgerät für dieselbe mindestens eine Laborgerätfunktion auf. Die Kopplungseinrichtung ist dazu eingerichtet, das Laborgerät und das mindestens eine weitere Laborgerät gleichzeitig zu betreiben und den mindestens einen Betriebsparameter zentral über eine gemeinsame Einstelleinrichtung unabhängig und/oder einheitlich für das Laborgerät und das mindestens eine weitere Laborgerät einzustellen.

Aus der EP 3 428 653 A1 sind ein Verfahren zum Betreiben eines Laborprobenverteilungssystems, ein Laborprobenverteilungssystem sowie ein Laborautomatisierungssystem vorbekannt.

Aus der US 2010 281 987 A1 ist ein Gerät zur Überwachung einer oder mehrerer Prozessgrößen vorbekannt. Das Gerät weist einen Vibrationssensor auf und ist dadurch gekennzeichnet, dass das Gerät aus einem Steckerelement und einem Buchsenelement besteht, welche durch eine Steckverbindunglösbar verbunden sind und welche über eine Schnittstelle miteinander kommunizieren.

Aus der WO 2017 164 378 A1 ist eine Rührvorrichtung vorbekannt. Um ein Behältnis leicht in eine vorgeschriebene Position auf einem Hauptkörper der Rührvorrichtung zu stellen und die Aufstellfläche, an dem das Behältnis an der Rührvorrichtung platziert wird, in einem akzeptablen hygienischen Zustand zu halten, ist in einem Bodenabschnitt eines Behältnisses, das als Milchzubereitungstopf ausgebildet ist, eine Nut ausgebildet. Mindestens ein Ende der Nut ist offen. Auf der Aufstellfläche ist eine hervorstehende Führung ausgebildet, die mit der Nut zusammenpasst und den Milchzubereitungstopf zu einer vorgeschriebenen Position auf der Aufstellfläche des Hauptkörpers der Rührvorrichtung führt. Das Behältnis wird in horizontaler Richtung auf die Aufstellfläche geführt und von dieser abgezogen.

Aus der DE 203 16 560 U1 ist ein Magnetrührer mit
einem Gehäuse vorbekannt, in welchem ein elektrischer Rührantrieb in Form von wechselweise erregbaren Magnetspulen oder Elektromagneten sowie wenigstens eine Steuerschaltung aufweisende Platine mit daran befestigten Steuerbausteinen für den Rührantrieb angeordnet sind. Der Rührer weist eine horizontale Aufstellfläche für ein das zu rührende Gut sowie einen Rührmagneten aufnehmendes Gefäß auf.

Die WO 2015 126 839 A1 offenbart ein Transportsystem für ein Analysegerät mit einer Vielzahl von Mehrschlitz-Probenträgern, die jeweils so konfiguriert sind, dass sie mehrere Probenröhrchen aufnehmen und sich entlang einer Führung des Transportsystems bewegen können. Ferner ist eine Probenhandhabungsvorrichtung vorgesehen, die so konfiguriert ist, dass sie ein erstes primäres Probenröhrchen aus einer Vielzahl von Probenröhrchen in einen ersten Schlitz eines ersten Mehrschlitz-Probenträgers der Vielzahl von Mehrschlitz-Probenträgern platziert und ferner so konfiguriert ist, dass sie mindestens ein leeres Probenröhrchen in mindestens einen zusätzlichen Schlitz des ersten Mehrschlitz-Probenträgers platziert.

Die US 2014 295 562 A1 offenbart einen Probenanalysator mit einem Behälterspeicher, der so konfiguriert ist, dass er eine Vielzahl von Reagenzbehältern aufnehmen kann, mit einer Setzkammer, die einen Setzabschnitt enthält, auf den mindestens ein Reagenzbehälter gesetzt wird. Der Probenanalysator umfasst einen Behälterdetektor zum Erkennen des Reagenzbehälters auf dem Setzteil.

Voraussetzung für ein effizientes, sicheres und komfortables Arbeiten mit derartigen Laborgeräten und Laborgeräteanordnungen ist ihre einfache und komfortable Handhabung.

Die Erfindung stellt sich der Aufgabe, ein Laborgerät und eine Laborgeräteanordnung der eingangs genannten Art bereitzustellen, deren Handhabung komfortabel und einfach ist.

Zur Lösung dieser Aufgabe wird zunächst ein Laborgerät mit den Mitteln und Merkmalen des ersten unabhängigen, auf ein Laborgerät gerichteten Anspruchs vorgeschlagen. So wird zur Lösung der Aufgabe insbesondere ein Laborgerät mit einem Gehäuse vorgeschlagen, an dem wenigstens eine Kopplungsschnittstelle und wenigstens eine zu der Kopplungsschnittstelle kompatible Gegenkopplungsschnittstelle angeordnet sind, wobei die Kopplungsschnittstelle und die Gegenkopplungsschnittstelle zur Stromübertragung und/oder zur Informationsübertragung eingerichtet sind.

Werden zwei erfindungsgemäße Laborgeräte gemeinsam verwendet, ist es möglich, die Laborgeräte so miteinander zu verbinden, dass eine Stromversorgung des einen an das andere angeschlossenen Laborgeräts durch eine Stromübertragung von dem einen Laborgerät und seiner Kopplungsschnittstelle auf die entsprechende Gegenkopplungsschnittstelle des anderen Laborgerät erfolgen kann. Ebenso ist es möglich, gegebenenfalls eine Informationsübertragung zwischen den derart gekoppelten Laborgeräten vorzunehmen. Über die Kopplungsschnittstelle und die Gegenkopplungsschnittstelle können so auch Informationen, zum Beispiel Steuerimpulse und/oder Informationen bezüglich bestimmter Prozessparameter der Laborgeräte zwischen und/oder über die Laborgeräte übertragen werden.

Zur Stromversorgung werden bei den bisher bekannten Laborgeräten Stromanschlusskabeln verwendet, wobei jedes Laborgerät jeweils mit einem eigenen Stromanschlusskabel versorgt wird. Je nach Standort der Laborgeräte, müssen die Stromanschlusskabel gegebenenfalls über Arbeitsflächen bis hin zu einem Stromanschluss verlegt werden. Wenn mehrere der bisher bekannten Laborgeräte an einem Laborarbeitsplatz verwendet werden sollen, ist es kaum möglich, die Vielzahl notwendiger Anschlusskabel ordnungsgemäß und platzsparend zu verlegen. Oftmals werden die Anschlusskabel einfach quer über den Arbeitsplatz verlegt, an dem die Laborgeräte aufgestellt werden sollen. Ähnlich ist es mit gegebenenfalls verwendeten Datenkabeln zur Ansteuerung oder Auslesung der bisher bekannten Laborgeräte. Die Vielzahl von Kabeln führt zu Unordnung, erschwert die Handhabung der Laborgeräte und ist auch aus Gründen der Arbeitssicherheit nachteilig.

Eine separate Verkabelung eines jeden Laborgeräts, wie sie bisher notwendig war, ist bei Verwendung zweier oder mehrerer erfindungsgemäßer Laborgeräte somit entbehrlich. Lediglich eines der Laborgeräte muss noch mit einem Stromanschlusskabel und/oder mit einem Datenkabel versehen werden. Insbesondere dann, wenn ein kombiniertes Strom- und Datenkabel verwendet wird, ist es möglich, nicht nur die Stromübertragung, sondern auch die Informationsübertragung über die Kopplungsschnittstelle und die Gegenkopplungsschnittstelle vorzunehmen.

Die wenigstens eine Kopplungsschnittstelle des Laborgerätes kann an einer ersten Seitenfläche des Gehäuses angeordnet oder ausgebildet sein. Die wenigstens eine Gegenkopplungsschnittstelle kann an einer zweiten Seitenfläche des Gehäuses angeordnet sein. Auf diese Weise ist es möglich, mehrere zumindest in Bezug auf ihre Kopplungsschnittstellen und Gegenkopplungsschnittstellen miteinander kompatible Laborgeräte zu verbinden und ein Cluster oder eine Anordnung von Laborgeräten zu schaffen, die über ein einziges Stromanschlusskabel mit einer Stromquelle verbunden und versorgt werden kann.

Sofern eine höhere Leistung in das Laborgerät eingebracht werden soll, ist es auch möglich, zwei oder mehrere Stromkabel bzw. Netzteile über eine oder mehrere Kopplungsschnittstellen oder Gegenkopplungsschnittstellen mit dem Laborgerät zu verbinden. Über die zwei oder mehrere Stromkabel kann dann eine mehrere miteinander gekoppelte Laborgeräte umfassende Laborgeräteanordnung mit der für ihren Betrieb notwendigen Energie versorgt werden.

In dem Gehäuse des Laborgerätes kann wenigstens eine elektrische, insbesondere elektronische, Funktionseinheit, wie beispielsweise ein Antrieb und/oder eine Heizeinrichtung, angeordnet sein. Diese Funktionseinheit kann mit der wenigstens einen Kopplungsschnittstelle und/oder mit der wenigstens einen Gegenkopplungsschnittstelle des Laborgerätes elektrisch und/oder informationstechnisch verbunden sein. So kann die Funktionseinheit des Laborgerätes über die

Kopplungsschnittstelle und/oder die Gegenkopplungsschnittstelle mit Strom und gegebenenfalls auch mit Informationen, also beispielsweise mit Steuersignalen, versorgt werden.

Bei einer bevorzugten Ausführungsform des Laborgerätes ist vorgesehen, dass die Kopplungsschnittstelle einen Steckverbinder und die Gegenkopplungsschnittstelle einen Gegensteckverbinder umfassen. Mithilfe des Steckverbinders und des Gegensteckverbinders können zwei miteinander zu verbindende Laborgeräte mechanisch gekoppelt werden. Zudem wird durch den Steckverbinder und den Gegensteckverbinder sichergestellt, dass sich eine zur Stromübertragung und/oder zur Informationsübertragung zwischen zwei Laborgeräten hergestellte Verbindung nicht unbeabsichtigt löst. Insbesondere bei Laborgeräten, die einen Antrieb aufweisen, also gegebenenfalls Schwingungen und/oder Vibrationen verursachen, kann dies vorteilhaft sein.

Ferner ist es möglich, dass die Kopplungsschnittstelle ein magnetisches Kopplungselement und die Gegenkopplungsschnittstelle ein magnetisches Gegenkopplungselement aufweisen. Über die zueinander kompatiblen magnetischen Kopplungselemente/Gegenkopplungselemente kann eine Haltekraft zwischen diesen übertragen und eine hergestellte Verbindung zwischen zwei gekoppelten Laborgeräten gesichert werden. Auch dies kann eine zuverlässige Verbindung zweier derartiger Laborgeräte untereinander begünstigen.

Ferner ist es möglich, dass die Kopplungsschnittstelle ein Rastelement und die Gegenkopplungsschnittstelle ein Gegenrastelement aufweisen. Über das Rastelement und das Gegenrastelement ist es möglich, eine haptische und/oder akustische Rückmeldung bei einer ordnungsgemäßen Verbindung der Kopplungsschnittstelle mit der Gegenkopplungsschnittstelle bereitzustellen. Zudem begünstigt auch ein Rastelement und ein entsprechendes Gegenrastelement eine zuverlässige Verbindung zweier derartiger Laborgeräte untereinander und hilft ein ungewolltes Lösen der Verbindung zu vermeiden.

Wenn das Gehäuse des Laborgerätes einen symmetrischen Querschnitt aufweist, ist es besonders einfach, eine Laborgeräteanordnung aus derartigen miteinander gekoppelten Laborgeräte herzustellen und entsprechend vorhandenen Platzverhältnisse zu gestalten.

Bei einer bevorzugten Ausführungsform des Laborgerätes ist vorgesehen, dass Seitenflächen des Gehäuses in einem rechten Winkel zueinander angeordnet sind, insbesondere dass aneinander angrenzenden Seitenflächen des Gehäuses in einem rechten Winkel zueinander angeordnet sind. Auf diese Weise kann das Laborgeräte einen im wesentlichen rechteckigen Querschnitt aufweisen, der einen ordentlichen und frei erweiterbaren modularen Aufbau einer Laborgeräteanordnung aus Laborgeräten begünstigen kann.

Wenn die Kopplungsschnittstelle ein Zentriermittel und/oder wenn die Gegenkopplungsschnittstelle ein Gegenzentriermittel aufweist/aufweisen, können zwei m Laborgeräte besonders komfortabel und einfach miteinander verbunden werden. Als Zentriermittel kann beispielsweise ein Gehäusevorsprung oder eine Gehäuseausbuchtung dienen. Das Gegenzentriermittel kann entsprechend ausgeformt sein und beispielsweise als Gehäuseeinbuchtung ausgebildet sein.

Bei einer Ausführungsform des Laborgerätes ist vorgesehen, dass eine Kopplungsschnittstelle und eine Gegenkopplungsschnittstelle jeweils an entgegengesetzten Seitenflächen des Gehäuses angeordnet sind. Auch an jeder Seitenfläche des Gehäuses kann jeweils eine Kopplungsschnittstelle oder eine Gegenkopplungsschnittstelle angeordnet sein. Es ist auch möglich, dass an jeder Seitenfläche des Gehäuses sowohl eine Kopplungsschnittstelle als auch eine Gegenkopplungsschnittstelle angeordnet ist.

Bei einer bevorzugten Ausführungsform des Laborgerätes ist vorgesehen, dass an zwei aneinander angrenzenden Seitenflächen des Gehäuses jeweils eine Kopplungsschnittstelle angeordnet ist und das an zwei aneinander angrenzenden Seitenflächen des Gehäuses, vorzugsweise an zwei anderen aneinander angrenzenden Seitenflächen des Gehäuses, jeweils eine Gegenkopplungsschnittstelle angeordnet ist.

Erfindungsgemäß weist das Laborgerät eine Aufstellfläche und einen Anwesenheitssensor auf, der zur Detektion der Anwesenheit eines Gefäßes auf der Aufstellfläche eingerichtet ist. Mithilfe des Anwesenheitssensors kann festgestellt werden, ob ein Gefäß, insbesondere ein Rührgefäße, auf die Aufstellfläche des Laborgerätes aufgestellt wurde. Kann der Anwesenheitssensor die Anwesenheit eines Gefäßes auf der Aufstellfläche detektieren, kann er ein entsprechendes Sensorsignal an eine Funktionseinheit, insbesondere einen Antrieb und/oder eine Heizeinrichtung des Laborgerätes übertragen, durch das die Funktionseinheit aktiviert wird. Wird das Gefäß von der Aufstellfläche genommen, kann auch dies mit dem Anwesenheitssensor detektiert werden. Durch ein entsprechendes Sensorsignal kann die wenigstens eine Funktionseinheit, insbesondere ein Antrieb und/oder eine Heizeinrichtung, deaktiviert werden. Als Antrieb kann beispielsweise ein magnetischer Rührantrieb für einen Rührmagneten verwendet werden. Das Laborgerät kann hierbei ein Laborgerät nach einem der übrigen, auf ein Laborgerät gerichteten Ansprüche sein.

Bei der erfindungsgemäßen Ausführungsform des Laborgeräts ist vorgesehen, dass der Anwesenheitssensor unterhalb der Aufstellfläche angeordnet ist. Ferner ist es erfindungsgemäß vorgesehen, als Anwesenheitssensor einen kapazitiven Sensor zu verwenden. Um die Sensorsignale des Anwesenheitssensors in Steuerbefehle umzusetzen, weist das Laborgerät eine Steuereinheit auf. Die Steuereinheit kann sowohl mit dem Anwesenheitssensor als auch mit einer Funktionseinheit, zum Beispiel einem Antrieb und/oder einer Heizeinrichtung des Laborgerätes verbunden sein.

Zur Verbesserung der Handhabung des Laborgerätes weist das Laborgerät bei einer Ausführungsform eine Anzeigevorrichtung auf, die in oder an oder unter einer Aufstellfläche des Laborgerätes ein ringförmiges Anzeigeelement aufweist. Wenn das Anzeigeelement einen entsprechenden Durchmesser aufweist, ist es möglich, dass es eine Standfläche für ein Gefäß innerhalb der Aufstellfläche außenseitig umgibt und/oder definiert. Über das ringförmige Anzeigeelement der Anzeigevorrichtung können Betriebsparameter, wie beispielsweise ein Drehmoment, eine Drehzahl, eine Leistung oder auch eine Temperatur ausgegeben werden. Dadurch, dass die Anzeige der entsprechenden Betriebsparameter über das ringförmige Anzeigeelement erfolgt, ist eine besonders intuitive und schnelle Ablesung für einen Anwender möglich, was die Handhabung des Laborgeräts vereinfacht.

Das ringförmige Anzeigeelement ermöglicht diverse Anzeigemodi. So ist es beispielsweise möglich, über das Anzeigeelement unterschiedlich farbige Anzeigen auszugeben. Insbesondere wenn das ringförmige Anzeigeelement ein geschlossen ringförmiges Anzeigeelement ist, kann über Lauflicht, das sich über das ringförmige Anzeigeelement bewegt beispielsweise der Betrieb des Laborgeräts angezeigt werden. Durch die Bewegungsrichtung eines derartigen Lauflichts kann eine Drehrichtung eines Antriebs ausgegeben werden. Durch die Geschwindigkeit des Lauflichts, das über das Anzeigeelement ausgegeben werden kann, kann eine Drehzahl und/oder eine Leistung angezeigt werden. Insgesamt ist so eine besonders intuitive und zügige Ablesung des Anzeigeelements möglich.

In ähnlicher Weise verhält es sich mit der Anzeige eines Drehmoments oder einer Leistung des Laborgerätes. Wird das ringförmige Anzeigeelement nur zu einem Teil, also zum Beispiel innerhalb eines bestimmten Winkelbereichs, aktiviert, wird auf den ersten Blick ersichtlich, mit welchem Teil seiner maximalen Leistung das Laborgerät betrieben wird.

Bei einer Ausführungsform weist die Anzeigevorrichtung als Anzeigeelement einen ringförmigen Lichtleiter auf. Es ist aber auch möglich und bevorzugt, dass die Anzeigevorrichtung als Anzeigeelement einen Verbund aus mehreren ringförmig angeordneten Lichtquellen, insbesondere LEDs, aufweist. Besonders vorteilhaft ist es, wenn als LEDs sogenannte RGB-LEDs verwendet werden. Auf diese Weise ist es möglich, unterschiedlichste Farben über das Anzeigeelement der Anzeigevorrichtung auszugeben und somit unterschiedlichste Zustände des Laborgerätes farblich kodiert wiederzugeben.

Um das Anzeigeelement der Anzeigevorrichtung vor möglicherweise aggressiven Umgebungsbedingungen schützen zu können, ist es vorteilhaft, wenn dieses unterhalb der Aufstellfläche angeordnet ist. Ferner kann die Aufstellfläche lichtdurchlässig sein, um von dem Anzeigeelement ausgestrahltes Licht nach außen durchzulassen. Zu diesem Zweck kann die Aufstellfläche aus einem transparenten Material bestehen und/oder zumindest eine lichtdurchlässige Öffnung, zum Beispiel zumindest ein Loch und/oder zumindest einen Schlitz, aufweisen.

Die Anzeigevorrichtung kann eine Informationsausgabeeinheit aufweisen, die mit dem Anzeigeelement verbunden ist. Mithilfe der Informationsausgabeeinheit können Betriebsparameter des Laborgerätes über das Anzeigeelement ausgegeben werden. Wenn das Laborgerät über eine entsprechende Sensorik verfügt, ist es auch möglich, Parameter einer Substanz, die mit dem Laborgerät be- oder verarbeitet wird, über die Informationsausgabeeinheit und das damit verbundene Anzeigeelement auszugeben.

Eine, beispielsweise die bereits zuvor erwähnte, Aufstellfläche des Laborgerätes kann von einer Glasplatte und/oder von einer Kunststoffplatte und/oder von einer PMMA-Platte gebildet sein und/oder eine Glasplatte und/oder eine Kunststoffplatte und/oder eine PMMA-Platte umfassen. Hierdurch ist die Aufstellfläche des Laborgerätes besonders resistent gegen aggressive Umgebungsbedingungen, die im Laborbereich auftreten können. Zudem ist es möglich, eine derartige Aufstellfläche lichtdurchlässig zu gestalten, sodass sie zur Verwendung mit der zuvor ausführlich erwähnten Anzeigevorrichtung geeignet ist.

Die zuvor erläuterten Laborgeräte können als Laborrührer, insbesondere als Magnetrührer ausgebildet sein. Ferner ist es möglich, dass in einem oder dem bereits zuvor erwähnten Gehäuse des Laborgeräts als zumindest eine Funktionseinheit ein Antrieb, insbesondere ein Rührantrieb, vorzugsweise ein magnetischer Rührantrieb angeordnet ist.

Die Aufgabe wird schließlich auch mit einer Laborgeräteanordnung mit zumindest zwei miteinander gekoppelten Laborgeräten nach einem der auf ein Laborgerät gerichteten Ansprüche gelöst.

Dabei kann vorgesehen sein, dass ein Laborgerät der zumindest zwei Laborgeräte der Laborgeräteanordnung über seine Kopplungsschnittstelle mit der Gegenkopplungsschnittstelle eines anderen Laborgerätes der zumindest zwei Laborgeräte verbunden ist. Die Verbindung der Laborgeräte kann unmittelbar und direkt über miteinander verbundene Kopplungsschnittstellen und Gegenkopplungsschnittstellen erfolgen. Es ist aber auch möglich, zwei Laborgeräte über ein Zwischenstück miteinander zu verbinden, das einerseits mit einer Kopplungsschnittstelle eines Laborgeräts und andererseits mit einer Gegenkopplungsschnittstelle eines anderen Laborgeräts verbunden ist.

Ferner ist es möglich, dass die Laborgeräteanordnung ein Steuermodul aufweist. Dieses Steuermodul kann mit einem der zumindest zwei Laborgeräte verbunden werden und in Gebrauchsstellung verbunden sein. Die Verbindung zwischen dem Steuermodul und dem einen der zumindest zwei Laborgeräte kann hierbei über eine Kopplungsschnittstelle und/oder eine Gegenkopplungsschnittstelle des Laborgerätes erfolgen. Zweckmäßig ist es in diesem Zusammenhang, wenn das Steuermodul eine zu der Kopplungsschnittstelle kompatible Gegenkopplungsschnittstelle und/oder eine zu der Gegenkopplungsschnittstelle kompatible Kopplungsschnittstelle aufweist.

Besonders zweckmäßig ist es, wenn das Steuermodul eine Kopplungsschnittstelle und eine Gegenkopplungsschnittstelle aufweist. Ferner kann das Steuermodul in Gebrauchsstellung zur, vorzugsweise separaten, Steuerung jedes Laborgeräte der Laborgeräteanordnung eingerichtet sein. In einem Betriebsmodus kann ferner vorgesehen sein, mehrere der wenigstens zwei Laborgeräte der Laborgeräteanordnung zu einer Funktionsgruppe zusammenzufassen und diese dann mit dem Steuermodul gemeinsam anzusteuern. So ist es möglich, eine Vielzahl von Laborgeräten aus einer Laborgeräteanordnung zu derartigen Funktionsgruppen zusammenzufassen und besonders komfortabel gruppenweise anzusteuern. Besonders vorteilhaft ist es, wenn eines der zumindest zwei Laborgeräte als Steuermodul ausgebildet und/oder nutzbar ist.

Bei einer Ausführungsform der Laborgeräteanordnung, die zuvor bereits erläutert wurde, umfasst diese zumindest ein, vorzugsweise starres Zwischenstück. Über das Zwischenstück können zwei Laborgeräte der Laborgeräteanordnung miteinander verbunden sein. Das Zwischenstück kann zur Übertragung von Strom und/oder Informationen zwischen mit dem Zwischenstück verbundenen Laborgeräten genutzt werden. Mit einem solchen Zwischenstück kann ein Abstand zwischen miteinander zu koppelnden Laborgeräten überbrückt werden.

Das Zwischenstück kann zumindest eine Kopplungsschnittstelle und zumindest eine Gegenkopplungsschnittstelle umfassen, die vorzugsweise an entgegengesetzten Enden des Zwischenstücks angeordnet und/oder ausgebildet sind. Mit seiner Kopplungsschnittstelle kann das Zwischenstück an die Gegenkopplungsschnittstelle eines Laborgeräts angeschlossen werden. Mit seiner Gegenkopplungsschnittstelle kann das Zwischenstück an die Kopplungsschnittstelle eines anderen Laborgeräts angeschlossen werden. Auf diese Weise können die Laborgeräte über das zwischengeschaltete Zwischenstück miteinander verbunden und Strom und/oder Informationen zwischen den Laborgeräten über das zwischengeschaltete Zwischenstück übertragen werden.

Zur Lösung der Aufgabe wird ferner auch die Verwendung eines Laborgeräts nach einem der auf ein Laborgerät gerichteten Ansprüche als Steuermodul zur Ansteuerung von Laborgeräten in einer Laborgeräteanordnung nach einem der auf eine solche gerichteten Ansprüche vorgeschlagen.

Ausführungsbeispiele der Erfindung sind anhand der Zeichnung nachfolgend beschrieben. Die Erfindung ist jedoch nicht auf das in den Figuren gezeigte Ausführungsbeispiel beschränkt. Weitere Ausführungsbeispiele ergeben sich in Kombination der Merkmale einzelner oder mehrerer Schutzansprüche untereinander und/oder mit einzelnen oder mehreren Merkmalen der gezeigten Ausführungsbeispiele. Es zeigen in teilweise stark schematisierter Darstellung:
- Figur 1: eine Seitenansicht eines erfindungsgemäßen Laborgerätes,
- Figur 2: ein entlang der in Figur 1 gezeigten Linie B bis B geschnittene Draufsicht auf das Laborgerät,
- Figur 3: die in Figur 2 mit dem Kreis markierte Einzelheit in vergrößerter Darstellung,
- Figur 4: eine Seitenansicht einer Laborgeräteanordnung, die mehrere Laborgeräte vom Typ des in den Figuren 1 bis 3 gezeigten Laborgeräts umfasst,
- Figur 5: eine entlang der Schnittlinie A bis A in Figur 4 geschnittene Ansicht der Laborgeräteanordnung,
- Figur 6: die in Figur 5 mit dem Kreis markierte Einzelheit in vergrößerter Darstellung,
- Figur 7: eine weitere Seitenansicht einer anders konfigurierten Laborgeräteanordnung,
- Figur 8: eine entlang der in Figur 7 gezeigten Linie A bis A geschnittene Ansicht der Laborgeräteanordnung,
- Figur 9: die in Figur 8 mit dem Kreis markierte Einzelheit in vergrößerter Darstellung,
- Figur 10: eine perspektivische Ansicht eines an der Kopplungsschnittstelle verwendeten Steckverbinders,
- Figur 11: eine perspektivische Ansicht eines an der Gegenkopplungsschnittstelle verwendeten Gegensteckverbinders,
- Figur 12: eine perspektivische Ansicht eines Laborgerätes mit einem Anwesenheitssensor an seiner Aufstellfläche,
- Figur 13: eine perspektivische Ansicht eines Laborgerätes, an dessen Aufstellfläche ein ringförmiges Anzeigeelement einer Anzeigevorrichtung des Laborgerätes zu erkennen ist,
- Figur 14: eine perspektivische Ansicht des in Figur 13 dargestellten Laborgerätes mit durchsichtig dargestellter Aufstellfläche, wobei unterhalb der Aufstellfläche ein geschlossener Ringverbund aus mehreren LEDs zu erkennen ist, die gemeinsam das Anzeigeelement der Anzeigevorrichtung bilden, sowie
- Figur 15: eine Ansicht der Anzeigevorrichtung des in den Figuren 13 und 14 dargestellten Laborgerätes zur Veranschaulichung der Funktion des Anzeigeelements.

Bei der nachfolgenden Beschreibung verschiedener Ausführungsformen der Erfindung erhalten in ihrer Funktion übereinstimmende Elemente auch bei abweichender Gestaltung oder Formgebung übereinstimmende Bezugszahlen.

Sämtliche Figuren zeigen jeweils zumindest Teile eines im Ganzen mit 1 bezeichneten Laborgerätes. Das Laborgerät 1 ist als Magnetrührer ausgebildet und weist ein Gehäuse 2 auf, an dem zwei Kopplungsschnittstellen 3 und zwei dazu kompatible Gegenkopplungsschnittstellen 4 angeordnet sind.

Sowohl die Kopplungsschnittstellen 3 als auch die Gegenkopplungsschnittstellen 4 sind jeweils sowohl zur Stromübertragung als auch zur Informationsübertragung zwischen miteinander gekoppelten Laborgeräten 1 eingerichtet. Der Begriff Informationsübertragung umfasst hierbei sowohl die Übertragung von Stell- und/oder Steuersignalen als auch die Übertragung von Daten, beispielsweise die das Laborgerät 1 und/oder eine mit dem Laborgerät 1 bearbeiteten Substanz betreffen.

Die Kopplungsschnittstellen 3 sind an zwei unterschiedlichen Seitenflächen 5 des Gehäuses 2 des Laborgeräts 1 angeordnet. Die Gegenkopplungsschnittstellen 4 sind an zwei anderen Seitenflächen 6 des Gehäuses 2 angeordnet.

In dem Gehäuse 2 ist eine elektrische/elektronische Funktionseinheit 7 in Form eines magnetischen Rührantriebs angeordnet. Die Kopplungsschnittstellen 3 und die Gegenkopplungsschnittstellen 4 sind einerseits miteinander und andererseits auch mit der Funktionseinheit 7 elektrisch und informationstechnisch verbunden. Auf diese Weise kann die Funktionseinheit 7, hier der magnetische Rührantrieb, über die Kopplungsschnittstellen 3 und die Gegenkopplungsschnittstellen 4 sowohl mit Strom als auch mit Steuersignalen versorgt werden.

Die Kopplungsschnittstellen 3 umfassen jeweils einen Steckverbinder 8, während die Gegenkopplungsschnittstellen 4 mit jeweils einem zu den Steckverbindern 8 kompatiblen Gegensteckverbinder 9 ausgestattet sind. Die Steckverbinder 8 weisen Kontaktelemente 10 in Form von Kontaktpins 11 auf, während die Gegensteckverbinder 9 mit Gegenkontaktelementen 12 in Form von Kontaktmulden oder Kontaktbuchsen 13 ausgestattet sind. Die Kontaktpins 11 sind federnd gelagert und erlauben eine zuverlässige Kontaktierung der Kontaktmulden oder Kontaktbuchsen 13 auch bei wechselnder Belastung miteinander verbundener Laborgeräte 1.

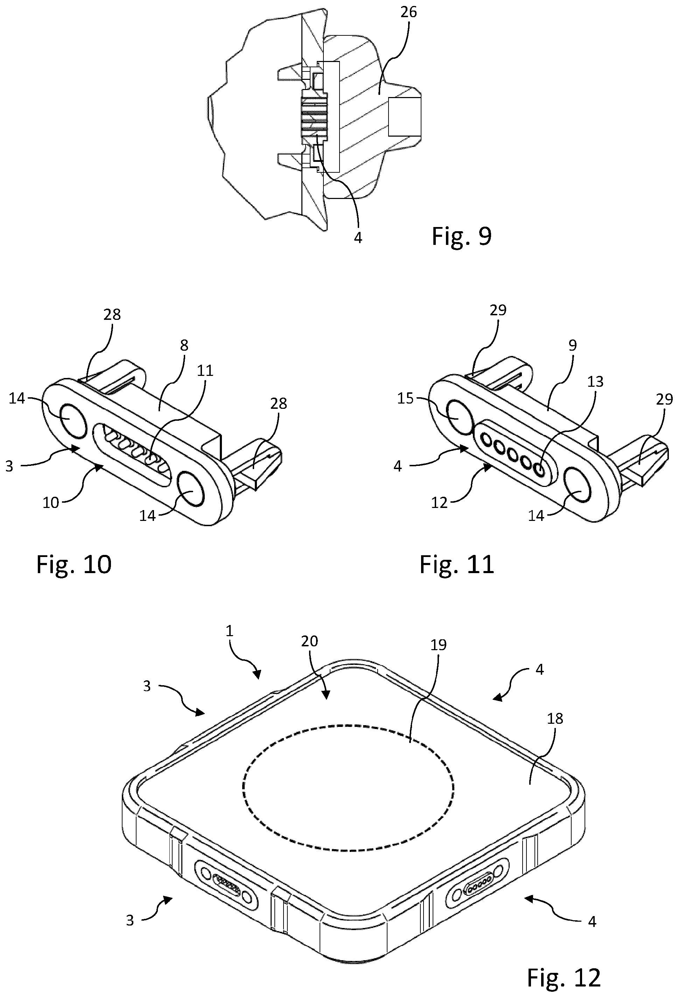

Figur 10 zeigt eine Einzelteildarstellung eines Steckverbinders 8 mit seinen insgesamt fünf Kontaktpins 11. Figur 11 zeigt den passenden Gegensteckverbinder 9, der entsprechend fünf Kontaktmulden oder Kontaktbuchsen 13 aufweist, in die die Kontaktpins 11 in Gebrauchsstellung eingreifen. Sowohl der Steckverbinder 8 als auch der Gegensteckverbinder 9 wird mithilfe von Befestigungsclips 28 und 29 in einer entsprechenden Ausnehmung in dem Gehäuse 2 des Laborgeräts 1 befestigt.

Der Steckverbinder 8 ist mit zwei magnetischen Kopplungselementen 14 ausgestattet. Der Gegensteckverbinder 9 weist zwei korrespondierende magnetische Gegenkopplungselemente 15 auf.

Mithilfe der magnetischen Kopplungselemente 14 und der korrespondierenden magnetischen Gegenkopplungselemente 15 kann die Kopplungsschnittstelle 3 zuverlässig und einfach lösbar mit der Gegenkopplungsschnittstelle 4 verbunden werden. Auf diese Weise können zwei über derartige Kopplungsschnittstellen 3 und Gegenkopplungsschnittstellen 4 verfügende Laborgeräte 1 magnetisch-mechanisch miteinander verbunden werden, um eine Stromversorgung und eine informationstechnische Verbindung zwischen den beiden Laborgeräten 1 herzustellen.

Bei einem in den Figuren nicht gezeigten Ausführungsbeispiel des Laborgerätes 1 sind die Kopplungsschnittstellen 3 mit Rastelementen und die Gegenkopplungsschnittstellen 4 mit dazu korrespondierend ausgebildeten Gegenrastelementen ausgestattet. Durch Verrasten der Rastelemente mit den Gegenrastelementen lässt sich eine besonders sichere Verbindung zwischen zwei miteinander verbundenen Laborgeräten 1 herstellen, die bei Bedarf natürlich wieder gelöst werden kann, um die Laborgeräte 1 voneinander zu trennen.

Das Gehäuse 2 der in den Figuren gezeigten Laborgeräte 1 hat einen symmetrischen Querschnitt. Seitenflächen 5 und 6 des Gehäuses 2 sind in einem rechten Winkel zueinander angeordnet. Dies trifft insbesondere auf aneinander angrenzende Seitenflächen 5 und 6 des Gehäuses 2 zu. An den Seitenflächen 5 sind die Kopplungsschnittstellen 3 ausgebildet, während an den Seitenflächen 6 des Gehäuses 2 die Gegenkopplungsschnittstellen 4 ausgebildet sind.

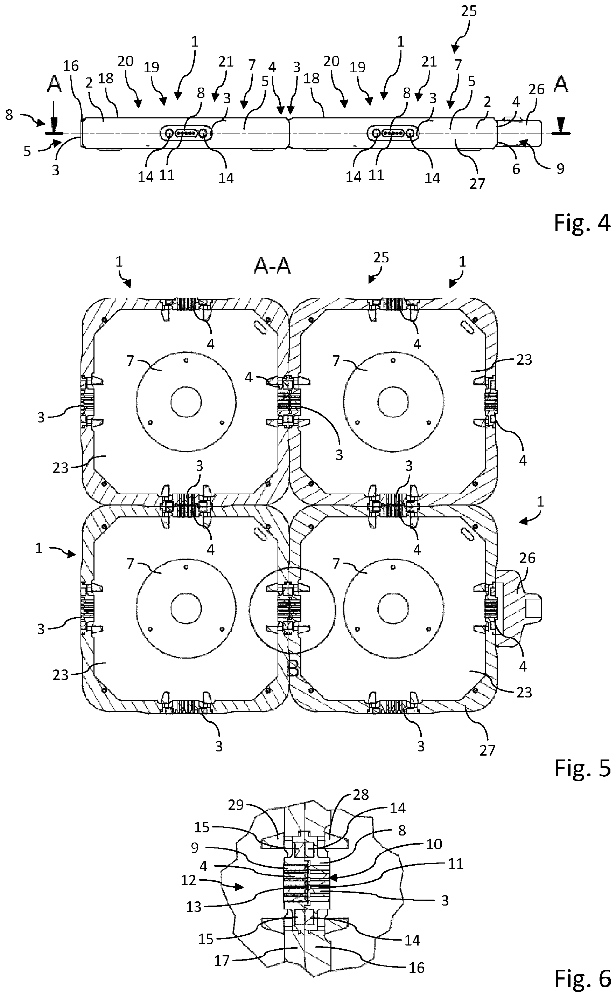

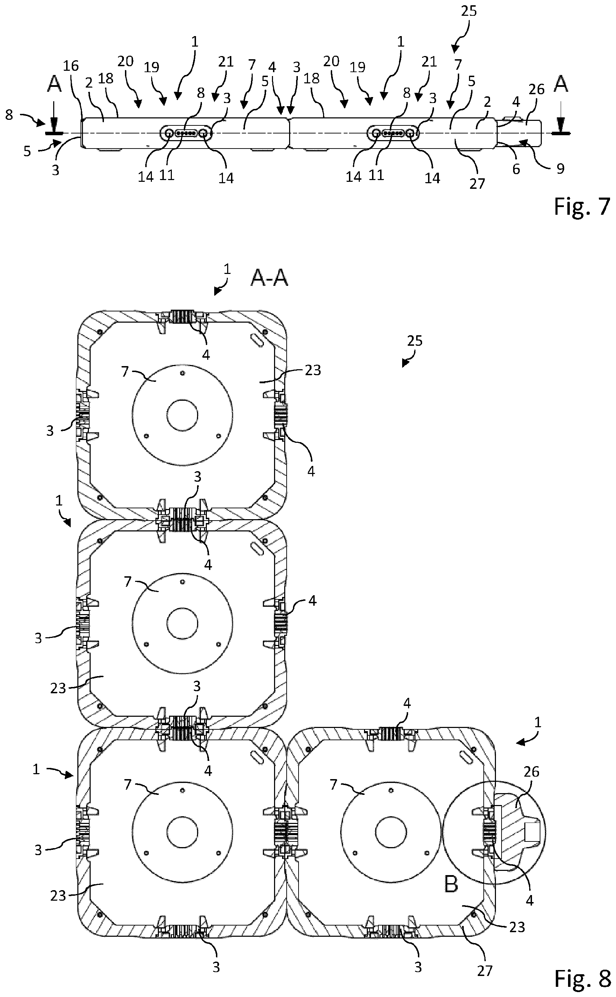

Die Kopplungsschnittstellen 3 sind mit jeweils einem Zentriermittel 16 in Form einer Gehäuseausbuchtung versehen. Die Gegenkopplungsschnittstellen 4 weisen dazu korrespondierend ausgebildete Gegenzentriermittel 17 auf, die als Gehäuseeinbuchtungen ausgebildet sind. Insbesondere die Figuren 5 und 8 verdeutlichen, wie die Zentriermittel 16 und die Gegenzentriermittel 17 der Laborgeräte 1 zusammenwirken. Sie geben eine ordnungsgemäße Relativposition zweier miteinander zu verbindender Laborgeräte 1 vor und erleichtern eine rasche Verbindung der zu verbindenden Laborgeräte 1.

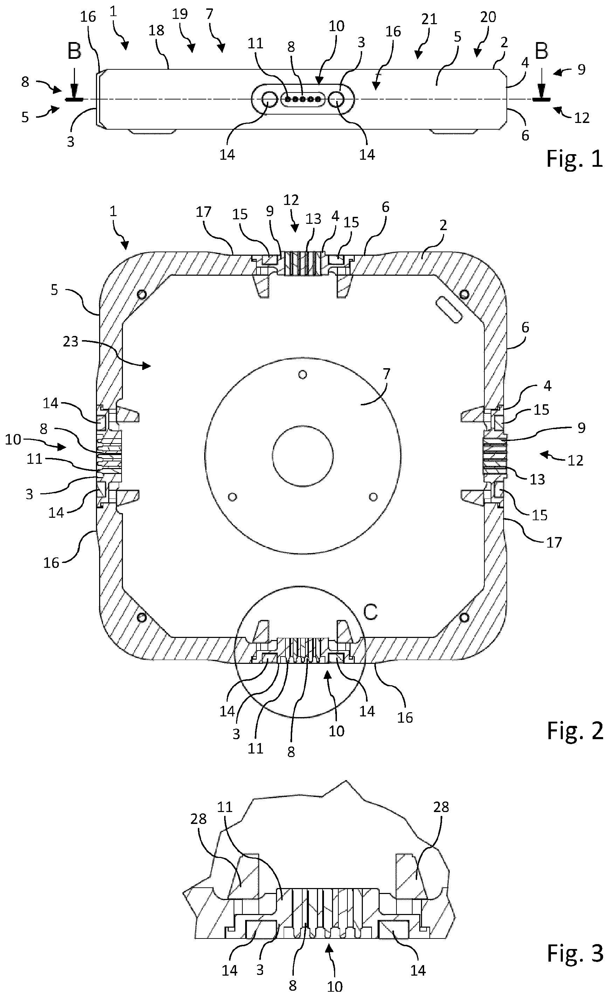

Die Figuren 2, 5, 8, 12 bis 14 verdeutlichen, dass die Kopplungsschnittstellen 3 und die Gegenkopplungsschnittstellen 4 jeweils paarweise an entgegengesetzten Seitenflächen 5 und 6 des Gehäuses 2 angeordnet sind. An jeder der insgesamt vier Seitenflächen 5, 6 des Gehäuses 2 ist entweder eine Kopplungsschnittstelle 3 oder eine Gegenkopplungsschnittstelle 4 angeordnet. Jedes der in den Figuren gezeigten Laborgeräte 1 bietet somit an jeder seiner Seitenflächen 5, 6 eine Möglichkeit zur Kopplung mit einem anderen Laborgerät 1, das über korrespondierende Kopplungsschnittstellen 3 und/oder Gegenkopplungsschnittstellen 4 verfügt.

Bei dem in den Figuren gezeigten Ausführungsbeispielen von Laborgeräten 1 sind die Kopplungsschnittstellen 3 an zwei aneinander angrenzenden Seitenflächen 5 des Gehäuses 2 angeordnet. Die beiden Gegenkopplungsschnittstellen 4 des gezeigten Laborgerätes 1 sind ebenso an zwei aneinander angrenzenden Seitenflächen 6 des Gehäuses 2 des Laborgerätes 1 angeordnet.

Aufgrund seines Magnetantriebs 7 ist das in den Figuren 1 gezeigte Laborgerät ein Laborrührer 1. Der im Inneren des Gehäuses 2 angeordnete Magnetantrieb 7 ist ein magnetischer Rührantrieb 7, mit dem ein Drehmoment durch eine Aufstellfläche 18 des Laborgerätes 1 und durch eine Wandung eines in den Figuren nicht gezeigten Rührgefäßes hindurch auf einen in den Figuren nicht gezeigten Rührmagneten übertragen werden kann.

Der Aufstellfläche 18 des Laborgerätes 1 ist ein Anwesenheitssensor 19 zugeordnet. Dieser Anwesenheitssensor 19 ist zur Detektion eines Gefäßes (in den Figuren nicht dargestellt) auf der Aufstellfläche 18 eingerichtet. Der Anwesenheitssensor 19 ist in Figur 12 dargestellt und als kapazitiver Sensor ausgebildet. Der Anwesenheitssensor 19 ist unterhalb der Aufstellfläche 18 angeordnet. Mithilfe des Anwesenheitssensors 19 kann das Laborgerät 1 feststellen, wenn ein Rührgefäß auf die Aufstellfläche 18 des Laborgerätes 1 aufgestellt wird. Durch ein entsprechendes Sensorsignal des Anwesenheitssensors 19 kann der magnetische Rührantrieb 7 des Laborgerätes 1 automatisch aktiviert werden. Eine separate Bedienung des Laborgeräts 1 zur Aktivierung des magnetischen Rührantriebs 7 kann so vermieden werden. Wird das Rührgefäß von der Aufstellfläche 18 des Laborgerätes 1 genommen, wird auch dies von dem Anwesenheitssensor 19 detektiert. Durch ein entsprechendes Sensorsignal oder ein Ausbleiben eines entsprechenden Sensorsignals kann der magnetische Rührantrieb 7 des Laborgerätes 1 dann automatisch deaktiviert werden. Dies kann zu einer bedeutenden Vereinfachung in der Handhabung des Laborgerätes 1 führen. Die Sensorsignale des Anwesenheitssensors 19 können von einer Steuereinheit 20 des Laborgerätes 1 verarbeitet und in entsprechende Steuersignale umgewandelt werden. So ist es möglich, den magnetischen Rührantrieb 7 mithilfe der Steuereinheit 20 in Abhängigkeit des Sensorsignals des Anwesenheitssensors 19 zu aktivieren und zu deaktivieren.

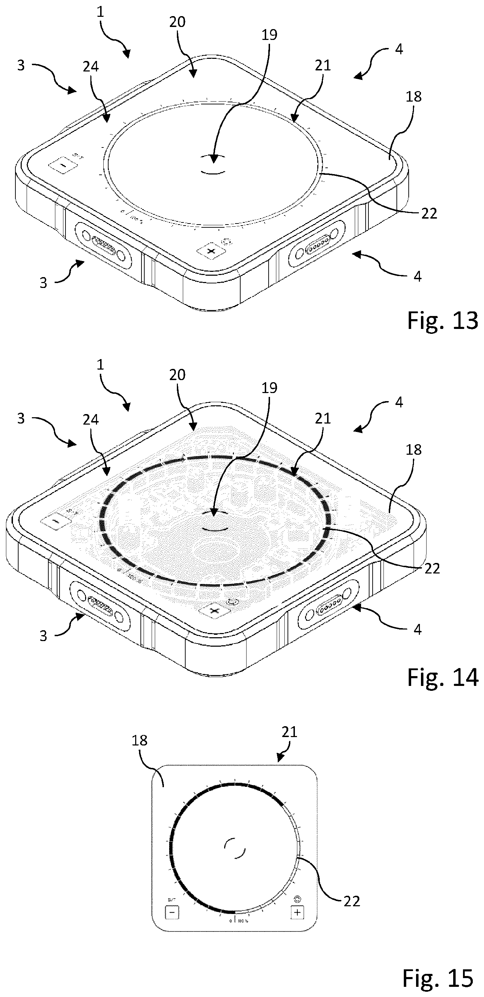

Die Figuren 13 bis 15 zeigen das Laborgerät 1 mit seiner Anzeigevorrichtung 21. Die Anzeigevorrichtung 21 weist ein ringförmiges Anzeigeelement 22 auf, das unterhalb der Aufstellfläche 18 des Laborgerätes 1 angeordnet ist. Durch die Aufstellfläche 18 ist das Anzeigeelement 22 des Laborgerätes 1 sichtbar und kann von einem Anwender des Laborgerätes 1 abgelesen werden.

Figur 14 verdeutlicht, dass das ringförmige Anzeigeelement 22 der Anzeigevorrichtung 21 aus einem Verbund von mehreren, ringförmig angeordneten Lichtquellenbesteht. Die Lichtquellen sind LEDs. Ferner umgibt das ringförmige Anzeigeelement 22 einen Bauraum 23, in dem der magnetische Rührantrieb 7 des Laborgerätes 1 in Gebrauchsstellung angeordnet ist. Der besseren Übersicht halber ist der magnetische Rührantrieb 7 in Figur 14 nicht dargestellt. Das Anzeigeelement 22 ist unterhalb der Aufstellfläche 18 angeordnet. Die Aufstellfläche 18 ist zumindest in dem Bereich, der in Gebrauchsstellung der Aufstellfläche 18 oberhalb des Anzeigeelements 22 angeordnet ist, lichtdurchlässig. Dies veranschaulicht insbesondere Figur 15, die eine Draufsicht auf die Aufstellfläche 18 mit dem darunter befindlichen und zum Teil aktivierten Anzeigeelement 22 zeigt.

Die Anzeigevorrichtung 21 weist eine Informationsausgabeeinheit 24 auf. Die Informationsausgabeeinheit 24 ist mit dem Anzeigeelement 22 verbunden. Der Informationsausgabeeinheit 24 können diverse Informationen, beispielsweise Prozessparameter oder gegebenenfalls auch Informationen bezüglich eines mit dem Laborgerät 1 bearbeiteten Mediums oder einer mit dem Laborgerät 1 bearbeiteten Substanz über die Anzeigevorrichtung 21 und ihr Anzeigeelement 22 ausgegeben werden. Die Aufstellfläche 18 des Laborgerätes 1 ist von einer Glasplatte gebildet, die eine hohe Resistenz gegen aggressive Substanzen aufweist.

Die Figuren 5 und 8 zeigen nun zwei unterschiedliche Ausführungsformen von Laborgeräteanordnungen 25, die mit den zuvor ausführlich beschriebenen Laborgeräten 1 hergestellt werden können. Die Laborgeräteanordnungen 25 bestehen aus vier miteinander gekoppelten Laborgeräten **1.** Die Laborgeräte 1 sind untereinander über ihre Kopplungsschnittstellen 3 und ihre Gegenkopplungsschnittstellen 4 verbunden. An den freien Kopplungsschnittstellen 3 und Gegenkopplungsschnittstellen 4 ist die Laborgeräteanordnung 25 durch weitere Laborgeräte 1 erweiterbar.

Über ein in den Figuren 5 und 6 sowie 8 und 9 gezeigten Anschluss 26 kann die gesamte Laborgeräteanordnung 25 und sämtliche, die Laborgeräteanordnung 25 bildenden Laborgeräte 1 mit Strom versorgt werden. Hierzu ist der Anschluss 26 an eine Gegenkopplungsschnittstelle 4 eines der Laborgeräte 1 der Laborgeräteanordnung 25 angeschlossen. Das Laborgerät **1, an** das der Anschluss 26 angeschlossen ist, kann als Steuermodul 27 für die gesamte Laborgeräteanordnung 25 und sämtliche darin zusammengefasste Laborgeräte dienen. Somit ist das als Steuermodul 27 fungierende Laborgerät 1 über eine seiner Kopplungsschnittstellen 3 und/oder über eine seiner Gegenkopplungsschnittstellen 4 mit einem der anderen Laborgeräte aus der Laborgeräteanordnung 25 verbunden.

Ausgehend von dem Steuermodul 27 können Steuersignale über die Kopplungsschnittstellen 3 und die Gegenkopplungsschnittstellen 4 auf sämtliche Laborgeräte 1 der Laborgeräteanordnung 25 übertragen werden. Es ist möglich, einzelne Laborgeräte 1 der Laborgeräteanordnung 25 zu Gruppen zusammenzufassen und diese dann gruppenweise über das Steuermodul 27 anzusteuern.

Das als Steuermodul 27 fungierende Laborgerät 1 übernimmt in der Laborgeräteanordnung 25 somit die Funktion eines Masters, dem alle anderen Laborgeräte 1 in der Laborgeräteanordnung 25 untergeordnet sind. So ist das als Steuermodul 27 fungierende Laborgerät 1 in seiner in den Figuren 5 und 8 gezeigten Gebrauchsstellung dazu eingerichtet, jedes Laborgerät 1 der Laborgeräteanordnung 25 bei Bedarf separat zu steuern und/oder zu regeln. Somit wird das Laborgerät 1 in der Laborgeräteanordnung 25 als Steuermodul 27 zur Steuerung sämtlicher Laborgeräte 1 der Laborgeräteanordnung 25 verwendet.

Die Erfindung befasst sich mit Verbesserungen auf dem technischen Gebiet der Laborgeräte. Hierzu wird unter anderem ein Laborgerät 1 vorgeschlagen, das an seinem Gehäuse 2 wenigstens eine Kopplungsschnittstelle 3 und wenigstens eine zu der Kopplungsschnittstelle 3 kompatible Gegenkopplungsschnittstelle 4 aufweist. Die Kopplungsschnittstelle 3 und die Gegenkopplungsschnittstelle 4 sind zur Stromübertragung und/oder zur Informationsübertragung eingerichtet.

### Bezugszeichenliste

- 1: Laborgerät
- 2: Gehäuse
- 3: Kopplungsschnittstelle
- 4: Gegenkopplungsschnittstelle
- 5: Seitenfläche mit 3
- 6: Seitenfläche mit 4
- 7: Funktionseinheit, magnetischer Rührantrieb
- 8: Steckverbinder
- 9: Gegensteckverbinder
- 10: Kontaktelement
- 11: Kontaktpin
- 12: Gegenkontaktelement
- 13: Kontaktmulde
- 14: magnetisches Kopplungselement
- 15: magnetisches Gegenkopplungselement
- 16: Zentriermittel
- 17: Gegenzentriermittel
- 18: Aufstellfläche
- 19: Anwesenheitssensor
- 20: Steuereinheit
- 21: Anzeigevorrichtung
- 22: Anzeigeelement
- 23: Bauraum
- 24: Informationsausgabeeinheit
- 25: Laborgeräteanordnung
- 26: Anschluss
- 27: Steuermodul
- 28: Befestigungsclip an 8
- 29: Befestigungsclip an 9

## Patentansprüche

1. Laborgerät (1) mit einem Gehäuse (2), an dem wenigstens eine Kopplungsschnittstelle (3) und wenigstens eine zu der Kopplungsschnittstelle (3) kompatible Gegenkopplungsschnittstelle (4) angeordnet sind, wobei die Kopplungsschnittstelle (3) und die Gegenkopplungsschnittstelle (4) zur Stromübertragung und/oder zur Informationsübertragung eingerichtet sind, wobei das Laborgerät (1) eine Aufstellfläche (18) und einen Anwesenheitssensor (19) aufweist, der zur Detektion der Anwesenheit eines Gefäßes auf der Aufstellfläche (18) eingerichtet ist, wobei der Anwesenheitssensor (19) unterhalb der Aufstellfläche (18) angeordnet ist, **dadurch gekennzeichnet, dass** der Anwesenheitssensor (19) ein kapazitiver Sensor ist und dass das Laborgerät (1) eine Steuereinheit (20) aufweist, die mit dem Anwesenheitssensor (19) verbunden ist.

2. Laborgerät (1) nach Anspruch 1, **dadurch gekennzeichnet, dass** die wenigstens eine Kopplungsschnittstelle (3) an einer ersten Seitenfläche (5,6) des Gehäuses (2) und die wenigstens eine Gegenkopplungsschnittstelle (4) an einer zweiten Seitenfläche (5,6) des Gehäuses (2) angeordnet sind.

3. Laborgerät (1) nach Anspruch 1 oder 2, **dadurch gekennzeichnet, dass** in dem Gehäuse () wenigstens eine elektrische, insbesondere elektronische, Funktionseinheit (7) angeordnet ist und/oder dass die wenigstens eine Kopplungsschnittstelle (3) und die wenigstens eine Gegenkopplungsschnittstelle (4) elektrisch und/oder informationstechnisch miteinander verbunden sind.

4. Laborgerät (1) nach einem der vorherigen Ansprüche, **dadurch gekennzeichnet, dass** die Kopplungsschnittstelle (3) einen Steckverbinder (8) und die Gegenkopplungsschnittstelle (4) einen Gegensteckverbinder (9) umfassen, insbesondere wobei der Steckverbinder (8) Kontaktelemente (10), insbesondere Kontaktpins (11), und der Gegensteckverbinder (9) Gegenkontaktelemente (12), insbesondere Kontaktbuchsen (13), aufweisen.

5. Laborgerät (1) nach einem der vorherigen Ansprüche, **dadurch gekennzeichnet, dass** die Kopplungsschnittstelle (3), insbesondere der Steckverbinder (8), zumindest ein magnetisches Kopplungselement (14) und die Gegenkopplungsschnittstelle (4), insbesondere der Gegensteckverbinder (9), zumindest ein magnetisches Gegenkopplungselement (15) aufweisen und/oder dass die Kopplungsschnittstelle (3) ein Rastelement und die Gegenkopplungsschnittstelle (4) ein Gegenrastelement aufweisen.

6. Laborgerät (1) nach einem der vorherigen Ansprüche, **dadurch gekennzeichnet, dass** das Gehäuse (2) einen symmetrischen Querschnitt hat und/oder dass Seitenflächen (5,6) des Gehäuses (2) in einem rechten Winkel zueinander angeordnet sind, insbesondere dass aneinander angrenzende Seitenflächen (5,6) des Gehäuses (2) in einem rechten Winkel zueinander angeordnet sind.

7. Laborgerät (1) nach einem der vorherigen Ansprüche, **dadurch gekennzeichnet, dass** die Kopplungsschnittstelle (3) ein Zentriermittel (16) und/oder dass die Gegenkopplungsschnittstelle (4) ein Gegenzentriermittel (17) aufweist/aufweisen.

8. Laborgerät (1) nach einem der vorherigen Ansprüche, **dadurch gekennzeichnet, dass** die Kopplungsschnittstelle (3) und die Gegenkopplungsschnittstelle (4) an entgegengesetzten Seitenflächen (5,6) des Gehäuses (2) angeordnet sind und/oder dass an jeder Seitenfläche (5,6) des Gehäuses (2) eine Kopplungsschnittstelle (3) und/oder eine Gegenkopplungsschnittstelle (4) angeordnet ist.

9. Laborgerät (1) nach einem der vorherigen Ansprüche, **dadurch gekennzeichnet, dass** an zwei aneinander angrenzenden Seitenflächen (5) des Gehäuses (2) jeweils eine Kopplungsschnittstelle (3) angeordnet ist und/oder dass an zwei aneinander angrenzenden Seitenflächen (6) des Gehäuses (2) jeweils eine Gegenkopplungsschnittstelle (4) angeordnet ist.

10. Laborgerät (1) nach einem der vorherigen Ansprüche mit einer Anzeigevorrichtung (21), **dadurch gekennzeichnet, dass** die Anzeigevorrichtung (21) in oder an oder unter einer Aufstellfläche (18) des Laborgeräts (1) ein ringförmiges Anzeigeelement (22) aufweist.

11. Laborgerät (1) nach Anspruch 10, **dadurch gekennzeichnet, dass** die Anzeigevorrichtung (21) als Anzeigeelement (22) einen ringförmigen Lichtleiter aufweist und/oder dass die Anzeigevorrichtung (21) als Anzeigeelement (22) einen Verbund aus mehreren ringförmig angeordneten Lichtquellen, insbesondere LEDs, aufweist.

12. Laborgerät (1) nach Anspruch 10 oder 11, **dadurch gekennzeichnet, dass** das Anzeigeelement (22) unterhalb der Aufstellfläche (18) angeordnet ist und/oder dass die Aufstellfläche (18) lichtdurchlässig ist.

13. Laborgerät nach einem der Ansprüche 10 bis 12, **dadurch gekennzeichnet, dass** die Anzeigevorrichtung (21) eine Informationsausgabeeinheit (24) aufweist, die mit dem Anzeigeelement (22) verbunden ist.

14. Laborgerät (1) nach einem der vorherigen Ansprüche, **dadurch gekennzeichnet, dass** eine oder die Aufstellfläche (18) des Laborgeräts (1) von einer Glasplatte und/oder von einer Kunststoffplatte und/oder von einer PMMA-Platte gebildet ist und/oder eine Glasplatte und/oder eine Kunststoffplatte und/oder eine PMMA-Platte umfasst.

15. Laborgerät (1) nach einem der vorherigen Ansprüche, **dadurch gekennzeichnet, dass** das Laborgerät (1) ein Laborrührer (1), insbesondere ein Magnetrührer, ist und/oder dass in einem oder dem Gehäuse (2) des Laborgeräts (1) ein Antrieb, insbesondere ein Rührantrieb (7), vorzugsweise ein magnetischer Rührantrieb (7) angeordnet ist.

16. Laborgeräteanordnung (25) mit zumindest zwei miteinander gekoppelten Laborgeräten (1) nach einem der vorherigen Ansprüche.

17. Laborgeräteanordnung (25) nach Anspruch 16, **dadurch gekennzeichnet, dass** ein Laborgerät (1) der zumindest zwei Laborgeräte (1) über seine Kopplungsschnittstelle (3) mittelbar, insbesondere über ein Zwischenstück, oder unmittelbar mit der Gegenkopplungsschnittstelle (4) eines anderen Laborgeräts (1) der zumindest zwei Laborgeräte (1) verbunden ist, und/oder dass die Laborgeräteanordnung (25) ein Steuermodul (27) aufweist, das, insbesondere über eine Kopplungsschnittstelle (3) und/oder eine Gegenkopplungsschnittstelle (4), mit einem der zumindest zwei Laborgeräte (1) verbindbar und in Gebrauchsstellung verbunden ist.

18. Laborgeräteanordnung (25) nach Anspruch 17, **dadurch gekennzeichnet, dass** das Steuermodul (27) ein Laborgerät (1) aus der Laborgeräteanordnung (25) ist und/oder eine Kopplungsschnittstelle (3) und/oder eine Gegenkopplungsschnittstelle (4) aufweist und/oder in Gebrauchsstellung zur, insbesondere separaten, Steuerung jedes Laborgeräts (1) der Laborgeräteanordnung (25) eingerichtet ist.

19. Laborgeräteanordnung (25) nach einem der vorherigen Ansprüche, dass die Laborgeräteanordnung (25) wenigstens ein Zwischenstück umfasst, über das zwei Laborgeräte (1) der Laborgeräteanordnung (25) miteinander verbunden sind, insbesondere wobei das Zwischenstück zumindest eine Kopplungsschnittstelle (3) und zumindest eine Gegenkopplungsschnittstelle (4) umfasst, die vorzugsweise an entgegengesetzten Enden des Zwischenstücks angeordnet und/oder ausgebildet sind.

20. Verwendung eines Laborgeräts (1) nach einem der vorherigen Ansprüche als Steuermodul (27) in einer Laborgeräteanordnung (15) nach einem der vorherigen Ansprüche zur Steuerung der Laborgeräte (1) der Laborgeräteanordnung (25).

## Claims

1. Laboratory device (1) comprising a housing (2) on which at least one coupling interface (3) and at least one mating coupling interface (4) compatible with the coupling interface (3) are arranged, wherein the coupling interface (3) and the mating coupling interface (4) are configured for power transmission and/or for information transmission, wherein the laboratory device (1) comprises a support surface (18) and a presence sensor (19) configured to detect the presence of a vessel on the support surface (18), wherein the presence sensor (19) is arranged below the support surface (18), **characterized in that** the presence sensor (19) is a capacitive sensor and **in that** the laboratory device (1) comprises a control unit (20) which is connected to the presence sensor (19).

2. Laboratory device (1) according to claim 1, **characterized in that** the at least one coupling interface (3) is arranged on a first side surface (5, 6) of the housing (2) and the at least one mating coupling interface (4) is arranged on a second side surface (5, 6) of the housing (2).

3. Laboratory device (1) according to claim 1 or 2, **characterized in that** at least one electrical, in particular electronic, functional unit (7) is arranged in the housing () and/or **in that** the at least one coupling interface (3) and the at least one mating coupling interface (4) are connected to one another electrically and/or in terms of information technology.

4. Laboratory device (1) according to one of the preceding claims, **characterized in that** the coupling interface (3) comprises a plug connector (8) and the mating coupling interface (4) comprises a mating connector (9), in particular wherein the plug connector (8) has contact elements (10), in particular contact pins (11), and the mating connector (9) has mating contact elements (12), in particular contact sockets (13).

5. Laboratory device (1) according to one of the preceding claims, **characterized in that** the coupling interface (3), in particular the plug connector (8), has at least one magnetic coupling element (14) and the mating coupling interface (4), in particular the mating connector (9), has at least one magnetic mating coupling element (15), and/or **in that** the coupling interface (3) has a latching element and the mating coupling interface (4) has a mating latching element.

6. Laboratory device (1) according to one of the preceding claims, **characterized in that** the housing (2) has a symmetrical cross section and/or **in that** side surfaces (5, 6) of the housing (2) are arranged at a right angle to one another, in particular that side surfaces (5, 6) of the housing (2) adjoining one another are arranged at a right angle to one another.

7. Laboratory device (1) according to one of the preceding claims, **characterized in that** the coupling interface (3) has a centering means (16) and/or **in that** the mating coupling interface (4) has a mating centering means (17).

8. Laboratory device (1) according to one of the preceding claims, **characterized in that** the coupling interface (3) and the mating coupling interface (4) are arranged on opposite side surfaces (5, 6) of the housing (2) and/or **in that** a coupling interface (3) and/or a mating coupling interface (4) is arranged on each side surface (5, 6) of the housing (2).

9. Laboratory device (1) according to one of the preceding claims, **characterized in that** a coupling interface (3) is arranged on each of two mutually adjacent side surfaces (5) of the housing (2) and/or in that a mating coupling interface (4) is arranged on each of two mutually adjacent side surfaces (6) of the housing (2).

10. Laboratory device (1) according to one of the preceding claims, having a display device (21), **characterized in that** the display device (21) has an annular display element (22) in or on or below a support surface (18) of the laboratory device (1).

11. Laboratory device (1) according to claim 10, **characterized in that** the display device (21) comprises an annular light guide as display element (22) and/or **in that** the display device (21) comprises a composite of a plurality of annularly arranged light sources, in particular LEDs, as display element (22).

12. Laboratory device (1) according to claim 10 or 11, **characterized in that** the display element (22) is arranged below the support surface (18) and/or **in that** the support surface (18) is translucent.

13. Laboratory device according to one of claims 10 to 12, **characterized in that** the display device (21) has an information output unit (24) that is connected to the display element (22).

14. Laboratory device (1) according to one of the preceding claims, **characterized in that** a or the support surface (18) of the laboratory device (1) is formed by a glass plate and/or by a plastic plate and/or by a PMMA plate and/or comprises a glass plate and/or a plastic plate and/or a PMMA plate.

15. Laboratory device (1) according to one of the preceding claims, **characterized in that** the laboratory device (1) is a laboratory stirrer (1), in particular a magnetic stirrer, and/or **in that** a drive, in particular a stirring drive (7), preferably a magnetic stirring drive (7), is arranged in a or the housing (2) of the laboratory device (1).

16. Laboratory device arrangement (25) comprising at least two laboratory devices (1) according to one of the preceding claims which are coupled to each other.

17. Laboratory device arrangement (25) according to claim 16, **characterized in that** a laboratory device (1) of the at least two laboratory devices (1) is connected via its coupling interface (3) indirectly, in particular via an intermediate piece, or directly to the mating coupling interface (4) of another laboratory device (1) of the at least two laboratory devices (1), and/or **in that** the laboratory device arrangement (25) has a control module (27) which, in particular via a coupling interface (3) and/or a mating coupling interface (4), is connectable to one of the at least two laboratory devices (1) and is connected in the position of use.

18. Laboratory device arrangement (25) according to claim 17, **characterized in that** the control module (27) is a laboratory device (1) of the laboratory device arrangement (25) and/or has a coupling interface (3) and/or a mating coupling interface (4) and/or is configured, in a position of use, for, in particular separate, control of each laboratory device (1) of the laboratory device arrangement (25).

19. Laboratory device arrangement (25) according to one of the preceding claims, in that the laboratory device arrangement (25) comprises at least one intermediate piece, via which two laboratory devices (1) of the laboratory device arrangement (25) are connected to one another, in particular wherein the intermediate piece comprises at least one coupling interface (3) and at least one mating coupling interface (4), which are preferably arranged and/or formed at opposite ends of the intermediate piece.

20. Use of a laboratory device (1) according to one of the preceding claims as a control module (27) in a laboratory device arrangement (15) according to one of the preceding claims for controlling the laboratory devices (1) of the laboratory device arrangement (25).

## Revendications

1. Appareil de laboratoire (1) comprenant un boîtier (2), sur lequel sont disposées au moins une interface de couplage (3) et au moins une interface de couplage complémentaire (4) compatible avec l'interface de couplage (3), dans lequel l'interface de couplage (3) et l'interface de couplage complémentaire (4) sont conçues pour transmettre de l'électricité et/ou transmettre des informations, dans lequel l'appareil de laboratoire (1) présente une surface de placement (18) et un capteur de présence (19) qui est conçu pour détecter la présence d'un vaisseau sur la surface de placement (18), dans lequel le capteur de présence (19) est disposé au-dessous de la surface de placement (18), **caractérisé en ce que** le capteur de présence (19) est un capteur capacitif et **en ce que** l'appareil de laboratoire (1) présente une unité de commande (20) qui est reliée au capteur de présence (19).

2. Appareil de laboratoire (1) selon la revendication 1, **caractérisé en ce que** l'au moins une interface de couplage (3) est disposée sur une première surface latérale (5, 6) du boîtier (2) et l'au moins une interface de couplage complémentaire (4) est disposée sur une seconde surface latérale (5, 6) du boîtier (2).

3. Appareil de laboratoire (1) selon la revendication 1 ou 2, **caractérisé en ce que** dans le boîtier (2) est disposée au moins une unité fonctionnelle (7) électrique, en particulier électronique, et/ou **en ce que** l'au moins une interface de couplage (3) et l'au moins une interface de couplage complémentaire (4) sont reliées les unes aux autres électriquement et/ou par des techniques d'informations.

4. Appareil de laboratoire (1) selon l'une des revendications précédentes, **caractérisé en ce que** l'interface de couplage (3) comprend un connecteur (8) et l'interface de couplage complémentaire (4) comprend un connecteur complémentaire (9), en particulier dans lequel le connecteur (8) présente des éléments de contact (10), en particulier des broches de contact (11), et le connecteur complémentaire (9) présente des éléments de contact complémentaires (12), en particulier des douilles de contact (13).

5. Appareil de laboratoire (1) selon l'une des revendications précédentes, **caractérisé en ce que** l'interface de couplage (3), en particulier le connecteur (8), présente au moins un élément de couplage magnétique (14) et l'interface de couplage complémentaire (4), en particulier le connecteur complémentaire (9), présente au moins un élément de couplage complémentaire magnétique (15) et/ou **en ce que** l'interface de couplage (3) présente un élément d'encliquetage et l'interface de couplage complémentaire (4) présente un élément d'encliquetage complémentaire.

6. Appareil de laboratoire (1) selon l'une des revendications précédentes, **caractérisé en ce que** le boîtier (2) a une section transversale symétrique et/ou **en ce que** les surfaces latérales (5, 6) du boîtier (2) sont disposées à angle droit l'une par rapport à l'autre, en particulier **en ce que** les surfaces latérales (5, 6) du boîtier (2) qui sont adjacentes l'une à l'autre sont disposées à angle droit l'une par rapport à l'autre.

7. Appareil de laboratoire (1) selon l'une des revendications précédentes, **caractérisé en ce que** l'interface de couplage (3) présente un moyen de centrage (16) et/ou **en ce que** l'interface de couplage complémentaire (4) présente un moyen de centrage complémentaire (17).

8. Appareil de laboratoire (1) selon l'une des revendications précédentes, **caractérisé en ce que** l'interface de couplage (3) et l'interface de couplage complémentaire (4) sont disposées sur des surfaces latérales (5, 6) du boîtier (2) qui sont opposées et/ou **en ce que** sur chaque surface latérale (5, 6) du boîtier (2) est/sont disposée(s) une interface de couplage (3) et/ou une interface de couplage complémentaire (4).

9. Appareil de laboratoire (1) selon l'une des revendications précédentes, **caractérisé en ce que**, sur deux surfaces latérales (5) du boîtier (2) qui sont adjacentes l'une à l'autre, à chaque fois est disposée une interface de couplage (3) et/ou **en ce que**, sur deux surfaces latérales (6) du boîtier (2) qui sont adjacentes l'une à l'autre, à chaque fois est disposée une interface de couplage complémentaire (4).

10. Appareil de laboratoire (1) selon l'une des revendications précédentes comprenant un dispositif d'affichage (21), **caractérisé en ce que** le dispositif d'affichage (21) présente un élément d'affichage annulaire (22) dans ou sur ou sous une surface de placement (18) de l'appareil de laboratoire (1).

11. Appareil de laboratoire (1) selon la revendication 10, **caractérisé en ce que** le dispositif d'affichage (21) présente un conduit de lumière annulaire servant d'élément d'affichage (22) et/ou **en ce que** le dispositif d'affichage (21) présente un assemblage de plusieurs sources lumineuses disposées de manière annulaire, en particulier des LED, servant d'élément d'affichage (22).

12. Appareil de laboratoire (1) selon la revendication 10 ou 11, **caractérisé en ce que** l'élément d'affichage (22) est disposé au-dessous de la surface de placement (18) et/ou **en ce que** la surface de placement (18) est translucide.

13. Appareil de laboratoire selon l'une des revendications 10 à 12, **caractérisé en ce que** le dispositif d'affichage (21) présente une unité de sortie d'informations (24) qui est reliée à l'élément d'affichage (22).

14. Appareil de laboratoire (1) selon l'une des revendications précédentes, **caractérisé en ce qu'**une ou la surface de placement (18) de l'appareil de laboratoire (1) est formée par une plaque de verre et/ou une plaque de plastique et/ou par une plaque de PMMA et/ou comprend une plaque de verre et/ou une plaque de plastique et/ou une plaque de PMMA.

15. Appareil de laboratoire (1) selon l'une des revendications précédentes, **caractérisé en ce que** l'appareil de laboratoire (1) est un agitateur de laboratoire (1), en particulier un agitateur magnétique, et/ou **en ce que** dans un ou le boîtier (2) de l'appareil de laboratoire (1) est disposé un entraînement, en particulier un entraînement d'agitation (7), de préférence un entraînement d'agitation magnétique (7).

16. Ensemble d'appareils de laboratoire (25) comprenant au moins deux appareils de laboratoire (1) selon l'une des revendications précédentes qui sont couplés les uns aux autres.

17. Ensemble d'appareils de laboratoire (25) selon la revendication 16, **caractérisé en ce qu'**un appareil de laboratoire (1) parmi les au moins deux appareils de laboratoire (1) est relié indirectement par le biais de son interface de couplage (3), en particulier par le biais d'une pièce intermédiaire, ou directement à l'interface de couplage complémentaire (4) d'un autre appareil de laboratoire (1) parmi les au moins deux appareils de laboratoire (1) et/ou **en ce que** l'ensemble d'appareils de laboratoire (25) présente un module de commande (27), qui peut être relié à l'un des au moins deux appareils de laboratoire (1), en particulier par le biais d'une interface de couplage (3) et/ou d'une interface de couplage complémentaire (4), et est relié en position d'utilisation.

18. Ensemble d'appareils de laboratoire (25) selon la revendication 17, **caractérisé en ce que** le module de commande (27) est un appareil de laboratoire (1) parmi l'ensemble d'appareils de laboratoire (25) et/ou présente une interface de couplage (3) et/ou une interface de couplage complémentaire (4) et/ou est conçu en position d'utilisation pour commander, en particulier séparément, chaque appareil de laboratoire (1) de l'ensemble d'appareils de laboratoire (25).

19. Ensemble d'appareils de laboratoire (25) selon l'une des revendications précédentes, en ce que l'ensemble d'appareils de laboratoire (25) comprend au moins une pièce intermédiaire, par le biais de laquelle deux appareils de laboratoire (1) de l'ensemble d'appareils de laboratoire (25) sont reliés l'un à l'autre, en particulier dans lequel la pièce intermédiaire comprend au moins une interface de couplage (3) et au moins une interface de couplage complémentaire (4) qui sont disposées et/ou façonnées de préférence sur des extrémités opposées de la pièce intermédiaire.

20. Utilisation d'un appareil de laboratoire (1) selon l'une des revendications précédentes servant de module de commande (27) dans un ensemble d'appareils de laboratoire (15) selon l'une des revendications précédentes pour commander les appareils de laboratoire (1) de l'ensemble d'appareils de laboratoire (25).
